# EUROPÄISCHE PATENTANMELDUNG

(11) **EP 3 952 333 A1**
(43) Veröffentlichungstag der Anmeldung: **09.02.2022**
(21) Anmeldenummer: 21186672.8
(22) Anmeldetag: 20.07.2021
(51) Int. Cl.: H04R 1/10, B29C 44/12

(54) **KOPFHÖRERPOLSTER UND KOPFHÖRER MIT EINEM SOLCHEN POLSTER**

(30) Priorität: 04.08.2020 EP 20189376
(71) Anmelder: Austrian Audio GmbH, 1230 Wien (AT)
(72) Erfinder: Billaudet, Patrice, 2753 Markt Piesting (AT); Schuster, Philipp, 1130 Wien (AT); Pinter, Bernhard, 2440 Moosbrunn (AT)
(74) Vertreter: Patentanwälte Barger, Piso & Partner

(57) **Zusammenfassung**

Die Erfindung betrifft einen Kopfhörer mit zumindest einer Muschel, mit einem Gehäuse (11) und einem Polster (1).

Die Erfindung ist zum leichten Austausch des Polsters dadurch gekennzeichnet, dass der Polster (1) mit einer Montageplatte (6) verbunden ist, die Öffnungen (8) für den Schalldurchtritt und Schraublöcher (8) aufweist, dass der Polster (1) die Montageplatte (6) an deren äußerem Umfang umgreift und in diesem Bereich eine ringförmige, umlaufende Dichtfläche (4) ausbildet, und dass am Gehäuse (11) oder einer umlaufenden, ringförmigen Dichtung (13) eine Gegendichtfläche (5) ausgebildet ist, und dass der Polster (1) mittels Schrauben (10), die durch die Schraublöcher (8) ragen und in Innengewinden des Gehäuses (11) eingeschraubt sind, mit dem Gehäuse verbunden ist

Ein Polster, insbesondere Austauschpolster ist ebenfalls beschrieben.

## Beschreibung

Die Erfindung betrifft einen Kopfhörerpolster und einen Kopfhörer mit einem solchen Polster, entsprechend dem Oberbegriff des Anspruches 1 bzw. des Anspruches 8 und der US 4,654,898 aus 1985.

Diese Druckschrift offenbart die Anbringung eines flachen, flexiblen Polsters an einem kleinformatigen Wandlergehäuse mit Hilfe eines fest am Polster vorgesehenen Klettbandes. Der Polster weist drei "Blätter" auf, das mittlere mit einem passenden Loch wird auf der Ohrseite des Wandlers aufgelegt, die beiden anderen um den Wandler gefaltet und mit Hilfe des Klettbandes fixiert. Die so erhaltene Akustik ist völlig undefiniert, der Sitz am Wandler ist problematisch, der Tragekomfort ebenso, die Lebenddauer kurz.

Üblicherweise sind die (beiden) Polster eines Kopfhörers entweder fix am Gehäuse des Hörers angeordnet, oder sie sind mittels eines elastischen Elementes, beispielsweise einem Gummiring, etc., in einer Rille oder hinter entsprechenden Vorsprüngen am Gehäuse montiert. Ein Beispiel für eine Ausführung, bei der die Polster des Kopfhörers mittels eines elastischen Elements in einer Rille montiert werden, ist die US2013/0077800. Die feste Montage des Polsters am Kopfhörer hat den Nachteil, dass bei der unvermeidlichen Abnutzung die Lebensdauer des Kopfhörers insgesamt vom mechanisch empfindlichsten und dabei am meisten beanspruchten Teil bestimmt wird. Das Überstülpen nach US2013/0077800 ist wegen der mangelnden Abdichtung akustisch unbefriedigend sowie zumeist auch optisch suboptimal.

Eine weitere Druckschrift in diesem Bereich ist die JP 5131097. Der Polsterwulst wird hier zwischen zwei ringförmigen Elementen verschraubt, wobei der äußere der beiden Ringe formschlüssig mit einer Wandlerträgerplatte verbunden wird. Dies ermöglicht zwar eine Auswechselbarkeit des Kopfhörerpolsters, jedoch liegt auch hier eine unbestimmte Abdichtung zwischen Wandlerträgerplatte und Polsterung vor, mit dem Effekt, dass auch diese Lösung sowohl optisch als auch akustisch unbefriedigend ist.

Es besteht somit ein Bedarf an einem leicht demontierbaren und austauschbaren Polster, der mechanisch, akustisch und bevorzugt auch optisch zufriedenstellend am Hörer bzw. dessen Gehäuse zu montieren ist.

Es ist Ziel und Aufgabe der Erfindung, einen solchen Polster/Hörer zu schaffen.

Erfindungsgemäß werden diese Ziele durch die im kennzeichnenden Teil des Anspruches 1 bzw. des Anspruches 8 angegebenen Merkmale erreicht. Mit anderen Worten, der Polster weist entlang seiner Peripherie eine geschlossene, umlaufende, ringförmige Dichtfläche auf, er ist fest und dicht mit einer Montageplatte verbunden, die Öffnungen für den Schalldurchtritt und zumindest zwei, bevorzugt mehrere, Durchgangslöcher für Befestigungsschrauben aufweist. Der Hörer bzw. dessen Gehäuse weist eine zur Dichtfläche des Polsters formkomplementäre Gegendichtfläche auf und Innengewinde, die an Zahl und Position der der Durchgangslöcher des Polsters entsprechen.

Damit wird erfindungsgemäß eine leicht lösbare und zufolge der Dichtfläche luftdichte Montage erreicht, die alle angegebenen Aufgaben löst, da die meist unvermeidliche Naht der Hülle des Polsters, zumeist Leder oder Kunstleder, in dem bei der Montage verdeckten Bereich angeordnet werden kann und nach erfolgter Montage unsichtbar ist. Zu beachten ist, dass die Dichtfläche zwischen dem Polster und der Montageplatte im Zeitpunkt der Montage tatsächlich luftdicht ist. Durch Kriech- und Verformungsprozesse des verwendeten Polter- bzw. Polsterobermaterials kommt es während der Lebensdauer zu minimalen Spalten, die zwar einen minimalen Luftaustausch ermöglichen, aber weiterhin einen dichten und festen Sitz gewährleisten und akustisch unbedeutend sind. Als akustisch unbedeutend werden statistisch signifikante Veränderungen der Tonkurve verstanden, die bei Vergleich mit einem gemäß der vorliegenden Erfindung hergestellten, an der Dichtfläche luftdicht verklebten, Referenzhörer entstehen und in einem Bereich auftreten, der unterhalb der Hörschwelle liegt. Als Referenz für die Hörschwelle wird die ISO 28961:2012 iVm der ISO 226:2003 herangezogen.

Ausgestaltungen betreffen das Vorsehen von Führungen, die das Erreichen der richtigen Relativposition beim Zusammenbau erleichtern, das Anordnen der Schrauben in Vertiefungen, die nach der Montage durch optisch angenehme Stöpsel unsichtbar gemacht werden, und mehr an Details.

Da sowohl Kopfhörer mit derartigen Polstern, als auch Polster zum nachträglichen Austausch an sich von der Erfindung erfasst sind, sind die Ansprüche entsprechend abgefasst.

Die Erfindung wird im Folgenden anhand der Zeichnung näher erläutert. Dabei zeigt bzw. zeigen
die Fig. 1 einen erfindungsgemäßen Polster in perspektivischer Ansicht im Schnitt,
die Fig. 2 die Situation zu Beginn der Montage des Polsters der Fig. 1 am Gehäuse eines Hörers bei einer Variante mit Dichtring,
die Fig. 3 die Situation des Dichtens bei einer Variante ohne Dichtring im Detail,
die Fig. 4 die Situation der Fig. 3 bei einem Hörer als Ganzes und
die Fig. 5 einen Polster in perspektivischer Ansicht in Explosionsdarstellung mit seinen Befestigungsschrauben.

Einführend wird darauf hingewiesen, dass die Zeichnung nur die Teile eines Kopfhörers zeigt, die für die Erfindung wesentlich sind: den Polster und den Teil des Gehäuses, an dem er montiert wird. Der Bereich des Wandlers, der Bügel, die Zufuhr der Daten, etc., all dies wird von der Erfindung nicht betroffen und daher zur Vermeidung von Weitschweifigkeiten auch nicht dargestellt und beschrieben.

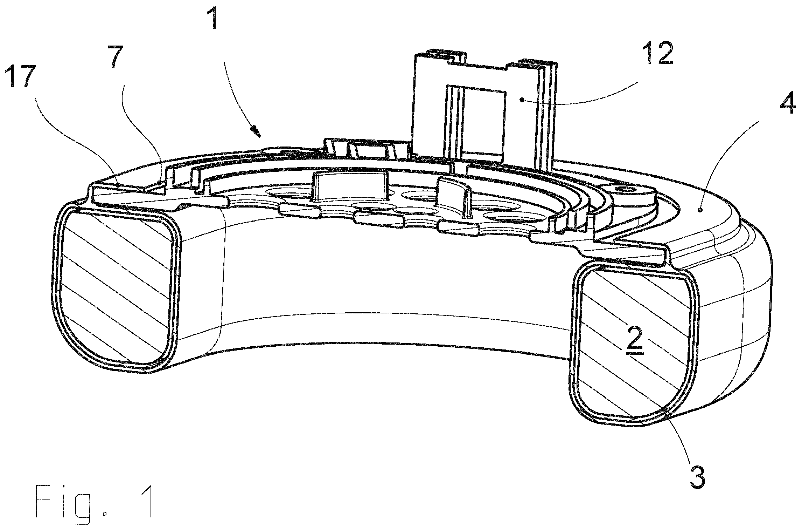

Es sollen zuerst anhand der Fig. 1 die erfindungswesentlichen Teile und ihre Variationsmöglichkeiten beschrieben werden:
Der Polster 1 umfasst erfindungsgemäß, wie hier und in den Ansprüchen verstanden, zumindest eine Füllung 2, eine Abdeckung oder Hülle 3 und die genannte ringförmige Dichtfläche 4, die im gezeigten Ausführungsbeispiel auf bzw. als eine Art Fahne 17 ausgebildet ist. Bei Verwendung passender Materialien und Herstellungsverfahren, beispielsweise Schaummaterial, kann die Abdeckung 3 einfach die "Haut" der Füllung 2 sein. Es ist aber auch möglich, eine eigene Füllung 2 mit einer Kunststofffolie oder mit Leder zu überziehen, die Folie 3 kann aufgeklebt sein oder, wie bei Leder, mit einer Naht geschlossen, eng (Pass-Sitz) an der Füllung 2 anliegen. Die nicht extra optisch hervorgehobene Naht 7 befindet sich dann am inneren Rand der Dichtfläche 4. Die Darstellung in der Zeichnung ist diesbezüglich neutral und daher als schematisch anzusehen.

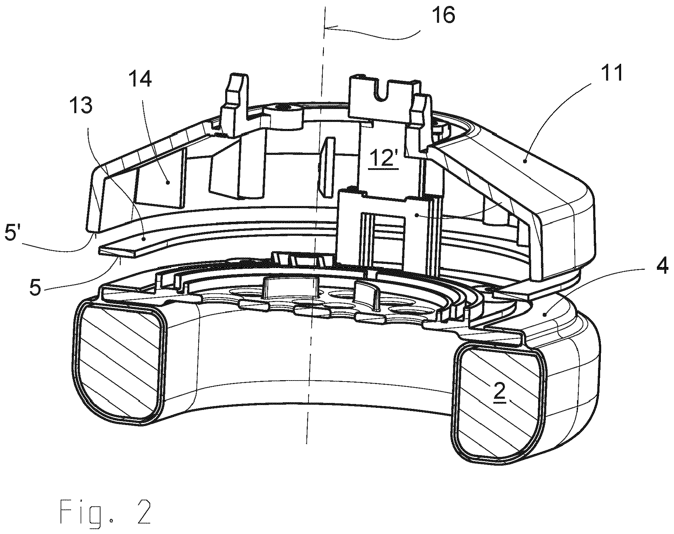

Die ringförmige Dichtfläche 4 kann, je nach der Art des Polsters 1, Teil von dessen Hülle 3 sein, oder ist mit diesem verklebt oder an ihn angeschäumt (oder umgekehrt, der Polster/die Füllung an die Dichtfläche) sein. Sie kann, wenn sie ein eigener Teil ist, bevorzugt, aus porenfreiem Kunststoff, natürlichem oder Kunst-Leder oder auch aus Metall bestehen. Die Dichtfläche 4 ist in der Zeichnung als Ebene normal zur Achse 16 (Fig. 2) des Kopfhörers dargestellt, was für die Herstellung, insbesondere wenn es sich einfach um die Hülle 3 handelt, und die Schaffung der Gegendichtfläche 5 (Fig. 2), günstig ist. Es muss aber nicht so sein. Insbesondere kann eine Stufung vorgesehen sein, die, gemeinsam mit einer entsprechenden Ausbildung der Gegendichtfläche 5 (Fig. 2), die Passgenauigkeit im montierten Zustand sicherstellt. Es kann die Dichtfläche auch zumindest annähernd parallel oder konisch zur Achse 16 (Fig. 2) entlang Erzeugender eines Zylinders oder Kegels (nicht notwendigerweise ein aufrechter und/oder Kreiszylinder/Kreiskegel) verlaufen.

Die Montageplatte 6 wird am Polster 1 durch die Dichtfläche 4, genauer durch die Ausbildung der Fahne 17, in Position gehalten. Zur Montage/Demontage weist sie an zumindest einer Stelle einen zumindest im Wesentlichen radial verlaufenden Schlitz auf, in den die Dichtfläche 4 eingeschoben werden kann, sodass sie anschließend fortschreitend über die Montageplatte 6 gezogen wird, bis er am Ende aus dem Schlitz und über diesen gelangt. Optional kann auch der Polster 1 selbst inklusive Dichtfläche 4 aus zumindest teilweise elastischem Material bestehen, wodurch ein Schlitz für des Überziehen des Polsters auf die Montageplatte nicht zwingend notwendig, ist da der Poster 1 nach dem Überziehen wieder in seine Ursprungsdimension zurückkehrt und die Montageplatte 6 bündig umfasst.

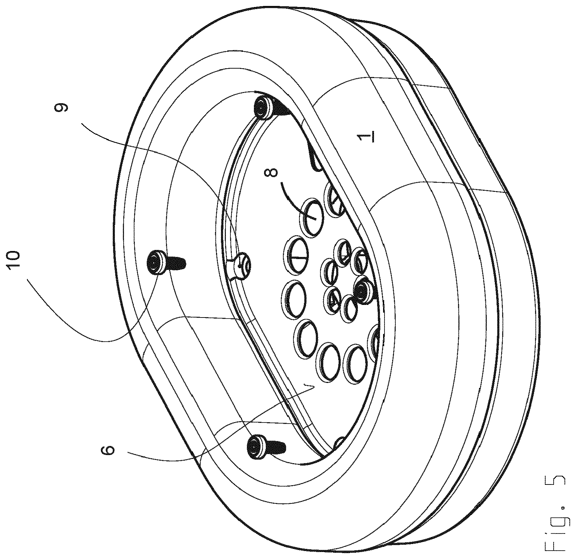

Die Montageplatte 6 (Fig. 5) weist Öffnungen 8 (Fig. 5) für den Schalldurchtritt auf und Schraublöcher 9, (Fig. 5) durch die von außen Schrauben 10 (Fig. 5) gesteckt und im Gehäuse 11 (Fig. 2) des Kopfhörers eingeschraubt werden. Weiters kann bevorzugt die Montageplatte 6 (Fig. 5), wie dargestellt, einen oder mehrere Vorsprünge, die als Führung 12 dienen, aufweisen. Bei der Montage des Polsters 1 am Gehäuse 11 (Fig. 2) erfolgt im Zusammenwirken mit entsprechend formkomplementären Gegenflächen 12' (Fig. 2) die Führung bzw. Positionierung Polster/Gehäuse 11 (Fig. 2).

Die **Fig. 2** zeigt die Situation zu Beginn der Montage eines Polsters 1 (Fig. 1) am Gehäuse 11, von dem nur die für die Erfindung wesentlichen Teile dargestellt sind. Weiters dargestellt ist eine Dichtung 13, die einerseits mit einer Gegendichtfläche 5 in Kontakt mit der Dichtfläche 4 steht, andererseits von Rippen 14 des Gehäuses 11 gegen die Dichtfläche gedrückt wird. Zusätzlich zur Gegendichtfläche 5 oder auch statt ihr kann eine Gegendichtfläche 5' an der Stirnfläche des Gehäuses 11 vorgesehen sein. Auch die der Gegendichtfläche 5' benachbarte, zylindrische oder konische innere Fläche des Gehäuses kann als (zusätzliche) Gegendichtfläche herangezogen werden, die dann gegen den äußeren Rand der Fahne 17 (Fig. 1) und/oder die Schräge des Polsters 1 (Fig. 1) dichtet.

Die mit der Führung 12 (Fig. 1) zusammenwirkende Gegenfläche 12' wird dabei in die hinterschnittene Führung 12 (Fig. 1) eingeschoben, wodurch auf einfache Weise eine exakte Positionierung erreicht wird. Die Führung 1 (Fig. 1) kann dabei so "lang" ausgebildet sein, dass sie in der Folge auch zur Montage und Positionierung eines Wandlers bzw. dessen Gehäuse und eventuell auch des Außengehäuses der Muschel verwendet werden kann, was besonders vorteilhaft ist und auch bei anderen Polstern verwendet werden kann.

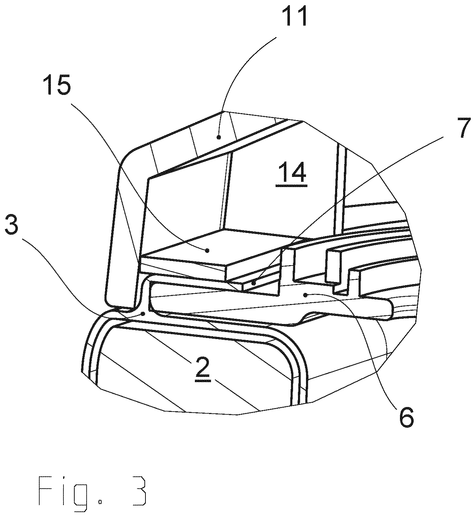

Die **Fig. 3** zeigt im vergrößerten Detail die Endposition einer Variante, bei der ein nach innen ragender Flansch 15 statt der Dichtung 13 (Fig. 2) vorgesehen ist: Der Flansch 15 bildet an seiner zum Polster 1 (Fig. 1) gerichteten Seite die Gegendichtfläche 5 (Fig. 2), die nach innen gerichtete Peripherie der von der Hülle 3 gebildeten Dichtfläche 4 (Fig. 2) mit der Naht 7 liegt frei und stört somit das Abdichten nicht. Versteifungsrippen der Montageplatte 6 sind gut zu erkennen.

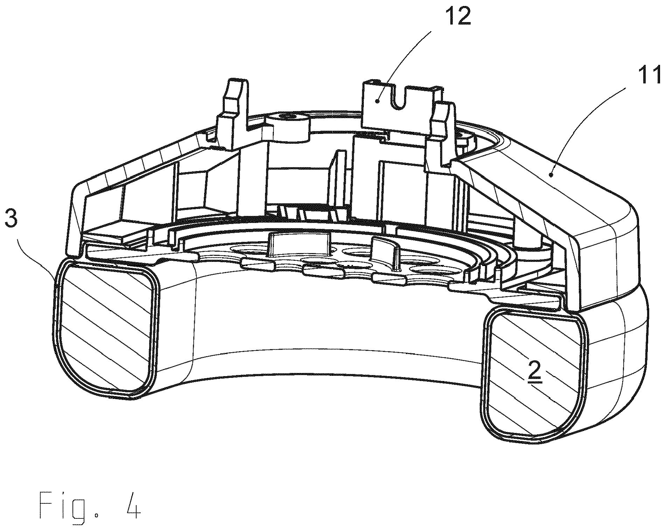

Die **Fig. 4** zeigt die Situation der Fig. 3 für einen der Hörer insgesamt.

Es ist dem Fachmann in Kenntnis der Erfindung klar, dass bei einer Anordnung der Dichtfläche unterschiedlich zu einer Ebene die normal zur Achse 16 (Fig. 2) verläuft, wie oben angedeutet, der Kontakt im annähernd zylindrischen/konischen Bereich der Hülle 3 vorzusehen ist, der, auf die Fig. 3 angewandt, etwa dort liegt, wo die Bezugslinie des Bezugszeichens 3 endet. Da bei der Montage die Relativbewegung und die resultierende Kraft der Schrauben beim Anziehen zumindest annähernd in Richtung der Achse 16 (Fig. 2) wirkt (auch festgelegt durch die mittels des Vorsprunges erreichte Führung 12), ist eine Abdichtung in diesem Bereich und mit einem Kontakt entlang von Umfangslinien (Mantelfläche eines Zylinders/Kegels) nicht so einfach und zuverlässig zu erreichen wie bei einer Kontaktfläche 4 (Fig. 2) mit zumindest einer Komponente normal zur Achse 16 (Fig. 2). Ob es zusätzlich oder hauptsächlich zu einem axialen, dichtenden Kontakt der ringförmigen Stirnfläche des Gehäuses 11 mit dem Polster 1 (Fig. 1) kommt, kann der Fachmann in Kenntnis der Erfindung und des Anwendungsfalles leicht entscheiden.

Die **Fig. 5** zeigt eine perspektivische Ansicht eines Polsters 1 für sich, die Schraublöcher 9 samt den nach Art einer Explosionsskizze eingezeichneten Schrauben 10 sind ebenso zu erkennen wie die Löcher 8 für den Schalldurchtritt.

Nachfolgend soll die Erfindung noch anhand einiger Beispiele erläutert werden.

### Beispiel 1:

Der Polster 1 für die Muschel eines Kopfhörers umgreift die Montageplatte 6, die Öffnungen 8 für den Schalldurchtritt und Schraublöcher 8 aufweist, an deren äußerem Umfang mit der aus Leder, Kunstleder, oder einem anderen geeigneten Obermaterial bestehenden Fahne 17 und bildet dadurch in diesem Bereich durch die Verschraubung der Montageplatte 6 mit dem Gehäuse 11 mittels der Schrauben 10 aufgrund des Drucks über die Gegendichtfläche 5 eine ringförmige, umlaufende feste und luftdichte Dichtfläche 4 aus. Wie bereits weiter oben beschrieben ist diese Verbindung nur im Zeitpunkt der Fügung wirklich luftdicht, wobei später auftretende Veränderungen, wie ebenfalls weiter oben beschrieben, akustisch unbedeutend sind.

### Beipsiel 2:

Der Polster 1 für die Muschel eines Kopfhörers wird an die Montageplatte 6, die Öffnungen 8 für den Schalldurchtritt und Schraublöcher 8 aufweist, an deren äußerem Umfang mit einem schäumenden, eine Haut 3 bildenden Kunststoff angeschäumt. Dieser Anschäumvorgang kann beispielsweise durch eine eigens dafür vorgesehene Form geschehen, die der gewünschten Endform entspricht. Dadurch bildet sich in diesem Bereich eine ringförmige, umlaufende feste und luftdichte Dichtfläche 4 aus, die durch die Verschraubung der Montageplatte 6 mit dem Gehäuse 11 mittels der Schrauben 10 und durch den Druck über die Gegendichtfläche 5 noch verstärkt wird. Wie bereits weiter oben beschrieben ist diese Verbindung nur im Zeitpunkt der Fügung wirklich luftdicht, wobei später auftretende Veränderungen, wie ebenfalls weiter oben beschrieben, akustisch unbedeutend sind.

### Beispiel 3:

Der Polster 1 für die Muschel eines Kopfhörers umgreift die Montageplatte 6, die Öffnungen 8 für den Schalldurchtritt und Schraublöcher 8 aufweist, an deren äußerem Umfang mit der aus Leder, Kunstleder, oder einem anderen geeigneten Obermaterial bestehenden Fahne 17 und bildet dadurch in diesem Bereich durch die Verschraubung der Montageplatte 6 mit dem Gehäuse 11 mittels der Schrauben 10 aufgrund des Drucks über die Gegendichtfläche 5 eine ringförmige, umlaufende feste und luftdichte Dichtfläche 4 aus. Zur exakteren Führung und einer daraus resultierenden besseren Passgenauigkeit wird dabei die Führung 12 vorgesehen, die formschlüssig eine Positionsgenauigkeit gewährleistet. Wie bereits weiter oben beschrieben ist diese Verbindung nur im Zeitpunkt der Fügung wirklich luftdicht, wobei später auftretende Veränderungen, wie ebenfalls weiter oben beschrieben, akustisch unbedeutend sind.

Die Erfindung kann verschiedentlich abgewandelt werden, so können die Öffnungen 8 für den Schalldurchtritt andere Form, Größe und/oder Anordnung auf der Montageplatte 6 haben; es können mehr oder weniger als vier Schrauben 10 vorgesehen sein, wobei im Allgemeinen zwei die untere und sechs, maximal acht als obere vernünftige Grenze anzusehen sind, die Montageplatte 6 muss nicht im Wesentlichen eben sein, sondern kann gewölbt und/oder konisch geformt sein, wobei auch die Ausrichtung der Schraubenachsen von der Richtung der Achse 16 in Grenzen abweichen kann. Der dargestellte Vorsprung, die Führung 12, ragt tief ins Gehäuse 11 und dient nicht nur der Montage und Positionierung des Polsters 1, sondern auch für den Wandler und/oder dessen Gehäuseteil, was aber nicht sein muss. Es kann, beispielsweise aus Kostengründen, eine Mehrzahl von sehr niedrigen Führungen vorgesehen sein, die kostengünstige Formen ermöglichen und auch leicht zu entformen sind.

Es ist unmittelbar einsichtig, dass die Führungen 12, wie der Vorsprung, völlig unabhängig von der Ausbildung des Polsters 1, auch bei anderen Kopfhörermuscheln verwendet werden können. Es werden dazu nur die Gegenführungen 12' im Gehäuse 11 benötigt. Dabei kann, wie erwähnt, die Führung(en) auch gleich für die Positionierung einer Kapsel bzw. eines Kapselgehäuses verwendet werden.

Die Erfindung kann verschiedentlich abgewandelt werden, so kann die Fahne 17 eine andere Form aufweisen als dargestellt, insbesondere wenn die Dichtfläche 4 am Rand des Polsters 1 angeordnet wird, die Führungen 12, 12' können die unterschiedlichsten Formen und Positionen einnehmen, die Dichtung 13 ebenso.

Die verwendbaren Materialien sind die üblichen und bedürfen keiner Erläuterung, desgleichen die Abmessungen.

Es soll noch darauf hingewiesen werden, dass in der Beschreibung und den Ansprüchen Angaben wie "unterer Bereich" eines Gehänges, Reaktors, Filters, Bauwerks, oder einer Vorrichtung oder, ganz allgemein, eines Gegenstandes, die untere Hälfte und insbesondere das untere Viertel der Gesamthöhe bedeutet, "unterster Bereich" das unterste Viertel und insbesondere einen noch kleineren Teil; während "mittlerer Bereich" das mittlere Drittel der Gesamthöhe (Breite - Länge) meint. All diese Angaben haben ihre landläufige Bedeutung, angewandt auf die bestimmungsgemäße Position des betrachteten Gegenstandes.

In der Beschreibung und den Ansprüchen bedeutet "im Wesentlichen" eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Alle Mengenangaben und Anteilsangaben, insbesondere solche zur Abgrenzung der Erfindung, soweit sie nicht die konkreten Beispiele betreffen, sind mit ± 10 % Toleranz zu verstehen, somit beispielsweise: 11 % bedeutet: von 9,9 % bis 12,1 %. Bei Bezeichnungen wie bei: "ein Lösungsmittel" ist das Wort "ein" nicht als Zahlwort, sondern als unbestimmter Artikel oder als Fürwort anzusehen, wenn nicht aus dem Zusammenhang etwas anderes hervorgeht.

Der Begriff: "Kombination" bzw. "Kombinationen" steht, soferne nichts anderes angegeben, für alle Arten von Kombinationen, ausgehend von zwei der betreffenden Bestandteile bis zu einer Vielzahl oder aller derartiger Bestandteile, der Begriff: "enthaltend" steht auch für "bestehend aus".

Die in den einzelnen Ausgestaltungen und Beispielen angegebenen Merkmale und Varianten können mit denen der anderen Beispiele und Ausgestaltungen frei kombiniert und insbesondere zur Kennzeichnung der Erfindung in den Ansprüchen ohne zwangläufige Mitnahme der anderen Details der jeweiligen Ausgestaltung bzw. des jeweiligen Beispiels verwendet werden.

### Bezugszeichenliste:

- 01: Polster
- 02: Füllung
- 03: Hülle
- 04: Dichtfläche
- 05: Gegendichtfläche
- 05': alternative, weitere, Gegendichtfläche
- 06: Montageplatte
- 07: Naht
- 08: Öffnungen Schalldurchtritt
- 09: Schraublöcher
- 10: Schrauben
- 11: Kopfhörergehäuse, Gehäuse
- 12: Führung (Vorsprung)
- 12': Gegenführung
- 13: Dichtung
- 14: Rippen
- 15: Flansch
- 16: Achse
- 17: Fahne

## Patentansprüche

1. Polster für die Muschel eines Kopfhörers, **dadurch gekennzeichnet, dass** der Polster (1) mit einer Montageplatte (6) verbunden ist, die Öffnungen (8) für den Schalldurchtritt und Schraublöcher (8) aufweist, dass der Polster (1) die Montageplatte (6) an deren äußerem Umfang umgreift und in diesem Bereich eine ringförmige, umlaufende feste und luftdichte Dichtfläche (4) ausbildet.

2. Polster nach Anspruch 1, **dadurch gekennzeichnet, dass** er eine Füllung (2) und eine Hülle (3) aufweist und dass eine ringförmige Fahne (17) der Hülle (3) um die Montageplatte (6) nach innen geschlagen ist.

3. Polster nach Anspruch 1 oder 2, **dadurch gekennzeichnet, dass** die Hülle (3) aus Leder oder Kunstleder besteht und genäht ist, und dass die Naht am äußersten Rand der Fahne (17) vorgesehen ist.

4. Polster nach einem der Ansprüche 1 bis 3, **dadurch gekennzeichnet, dass** das Polstermaterial in die Hülle (3) eingeschäumt ist.

5. Polster nach Anspruch 1, **dadurch gekennzeichnet, dass** er unter Ausbildung der Dichtfläche (4) an die Montageplatte (6) angeschäumt ist.

6. Polster nach einem der Ansprüche 1 bis 5, **dadurch gekennzeichnet, dass** die Montageplatte (6) zumindest einen Vorsprung als Führung (12) aufweist.

7. Polster nach einem der Ansprüche 1 bis 6, **dadurch gekennzeichnet, dass** die Montageplatte (6) zur Erhöhung der mechanischen Festigkeit Rippen, Verstärkungen u.dgl. aufweist.

8. Kopfhörer mit zumindest einem Polster (1) gemäß Anspruch 1, mit einem Gehäuse (11) und einem Polster (1), **dadurch gekennzeichnet, dass** der Polster (1) mit einer Montageplatte (6) verbunden ist, die Öffnungen (8) für den Schalldurchtritt und Schraublöcher (9) aufweist, dass der Polster (1) die Montageplatte (6) an deren äußerem Umfang umgreift und in diesem Bereich eine ringförmige, umlaufende Dichtfläche (4) ausbildet, und dass am Gehäuse (11) oder einer umlaufenden, ringförmigen Dichtung (13) eine Gegendichtfläche (5) ausgebildet ist, und dass der Polster (1) mittels zumindest einer Schraube (10), die durch die Schraublöcher (9) ragen und in Innengewinden des Gehäuses (11) eingeschraubt sind, mit dem Gehäuse verbunden ist.

9. Kopfhörer nach Anspruch 8, **dadurch gekennzeichnet, dass** der Polster (1) eine Füllung (2) und eine Hülle (3) aufweist und dass eine ringförmige Fahne (17) der Hülle (3) um die Montageplatte (6) nach innen geschlagen ist.

10. Kopfhörer nach Anspruch 9, **dadurch gekennzeichnet, dass** die Hülle (3) aus Leder oder Kunstleder besteht und genäht ist, und dass die Naht am äußersten Rand der Fahne (17) vorgesehen ist.

11. Kopfhörer nach Anspruch 9 oder 10, **dadurch gekennzeichnet, dass** der äußerste Rand der Fahne (17), gegebenenfalls die Naht, im montierten Zustand des Polsters innerhalb der Dichtfläche (4) positioniert ist.

12. Kopfhörer nach einem der Ansprüche 9 bis 11, **dadurch gekennzeichnet, dass** der Polster in die Hülle (3) eingeschäumt ist.

13. Kopfhörer nach Anspruch 8, **dadurch gekennzeichnet, dass** er unter Ausbildung der Dichtfläche (4) an die Montageplatte (6) angeschäumt ist.

14. Kopfhörer nach einem der Ansprüche 8 bis 13, **dadurch gekennzeichnet, dass** die Montageplatte (6) zumindest einen Vorsprung als Führung (12) aufweist, und das Gehäuse (11) zumindest eine damit formkomplementäre Ausnehmung, die gemeinsam eine Führung bei der Montage des Polsters (1) am Gehäuse (11) bilden.

15. Kopfhörer nach Anspruch 14, **dadurch gekennzeichnet, dass** der Vorsprung (12) von der Montageplatte (6) weiter absteht als das Gehäuse (11) in diesem Bereich und dass er als Positionierelement für einen Wandler bzw. dessen Gehäuse dient.

16. Kopfhörer nach einem der voranstehenden Ansprüche, **dadurch gekennzeichnet, dass** die Montageplatte (6) zur Erhöhung der mechanischen Festigkeit Rippen, Verstärkungen u.dgl. aufweist, die gegebenenfalls Vorsprünge und/oder Vertiefungen im Gehäuse (11) formschlüssig kontaktieren.
